# EUROPEAN PATENT SPECIFICATION

(11) **EP 1 777 102 B1**
(45) Date of publication and mention of the grant of the patent: **10.09.2008**
(21) Application number: 05748695.3
(22) Date of filing: 10.05.2005
(51) Int. Cl.: B60P 3/00

(54) **INTEGRAL PAVING VEHICLE**
INTEGRALER STRASSENFERTIGER
FINISSEUSE DE ROUTE

(30) Priority: 11.05.2004 ES 200401206
(43) Date of publication of application: 25.04.2007
(73) Proprietor: Vallor Equipamientos, S.L., 03204 Elche, Alicante (ES)
(72) Inventor: SAVALL PALACIO, Pedro Juan, E-03007 Alicante (ES); SAVALL PALACIO, Carlos, E-03007 Alicante (ES)
(86) International application number: PCT/ES2005/000251
(87) International publication number: WO 2005/108162

(56) References cited:
- GB-A- 2 158 783
- GB-A- 2 392 190
- JP-A- 7 009 908
- RU-C1- 2 057 659
- US-B1- 6 382 272

## Description

### Object of the invention.-

The object of the present invention is a complete road surfacing vehicle which consists of a platform which is joined by a false chassis to the cab of a medium sized lorry, on which is mounted on the front left hand side a compressor which can supply power to a pneumatic hammer, in the front central area a pallet, on the front right hand side a space left for work barriers, traffic signals and a trolley, in the central part of the platform a silo for concrete materials, underneath the silo a water deposit with two pumps, at the back a cement mixer, at the rear of the side a hose pipe and in the rear upper part two focus lights. In front of the false chassis a lifting crane is situated. The front of the platform as well as the crane is covered by a mobile fairing which can be moved backwards by a track system and the central-back part is covered by a fixed fairing closed by a aluminium screen which at the time of usage of the elements of the platform will be rolled up on to the top part. At the extreme back of the chassis is a tow-hook.

The complete road surfacing vehicle has as its function its use for works in urban areas, as it's dimension are such that it may be driven through all urban thoroughfares, which is one of the fundamental characteristics of the present invention.

### History of the Invention.-

In this field there are works machines in a technical state which include a cement mixer, with various utensils for the utilisation of the cement mixer for example as disclosed in JP 07-9908A, but none of them include all the elements which are necessary to completely do urban work, which means that other machines must be brought to the site to complete the work. In Fact, a vehicle with all the tools necessary to complete works in urban areas, and with dimensions which enable easy circulation in the thoroughfares of cities. has never been described.

### Description of the invention.-

At the present time the main problem which exists when performing works in urban centres is that various lorries with different machinery necessary for the job must go to the site, for example, a cement mixer, a water-cistem, a lorry which carries traffic barriers, trolleys, poles, tiles..., and all of these combined with the inconvenience that all these lorries produce in the public thoroughfare where the work is being carried out.

Other problems which exist at the present time is that most of the vehicles which carry these machines or tools are uncovered, whilst they are driven through urban areas, with the subsequent risk of the materials or tools falling on to the public thoroughfare.

Another problem is that this type of conventional machines do not possess any independent form of lighting, which means that work cannot be performed during the night, so daylight is needed to carry out repairs.

All the above-mentioned points explain that it would be very interesting to have just one vehicle which includes all the machinery and tools which are needed to carry out urban work, and above all a vehicle of such dimensions that it will be able to circulate in urban areas without producing any hold-ups in traffic in public thoroughfares.

This means, that there are numerous advantages in the present invention, the main ones of which are enumerated below:
- Just one vehicle, which has all the instruments and machinery necessary to carry out road surfacing in urban areas.
- The dimensions of the vehicle make for easy mobility in public thoroughfares.
- More speed in reaching the place where the repair work must be carried out.
- Better safety as the vehicle is completely covered whilst it is being driven through public streets.

### Description of the prototype of manufacture.-

The invention will be perfectly understood upon reading the description which follows, giving examples with reference to the drawings attached in which:

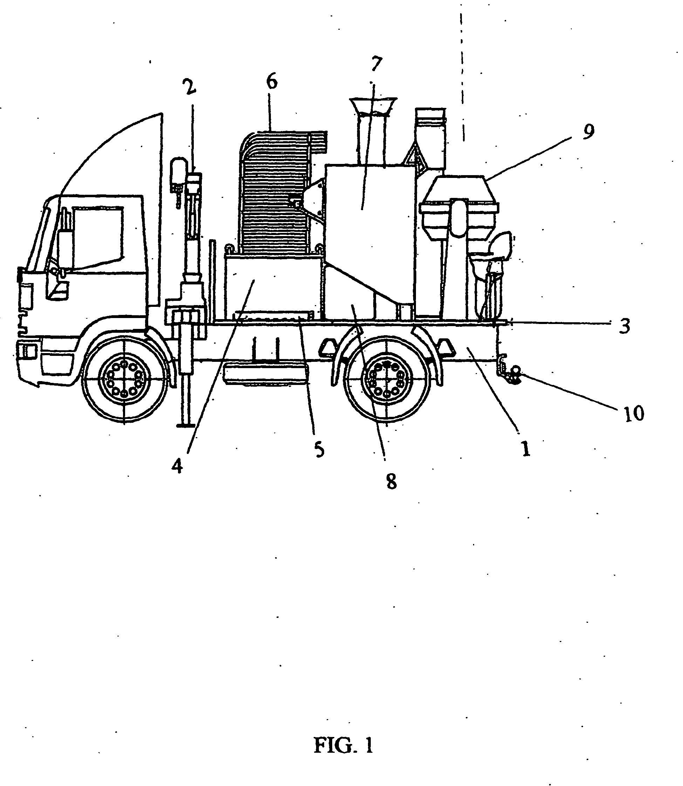

- figure 1 is a general view with side perspective, which illustrates the complete road surfacing vehicle in accordance with the invention, showing each of the elements which make up the platform, and more specifically, the false chassis (1), crane (2), compressor (4), pallet (5), space for barriers and tools (6), silo (7), water tank (8), cement-mixer (9), tow-hook.

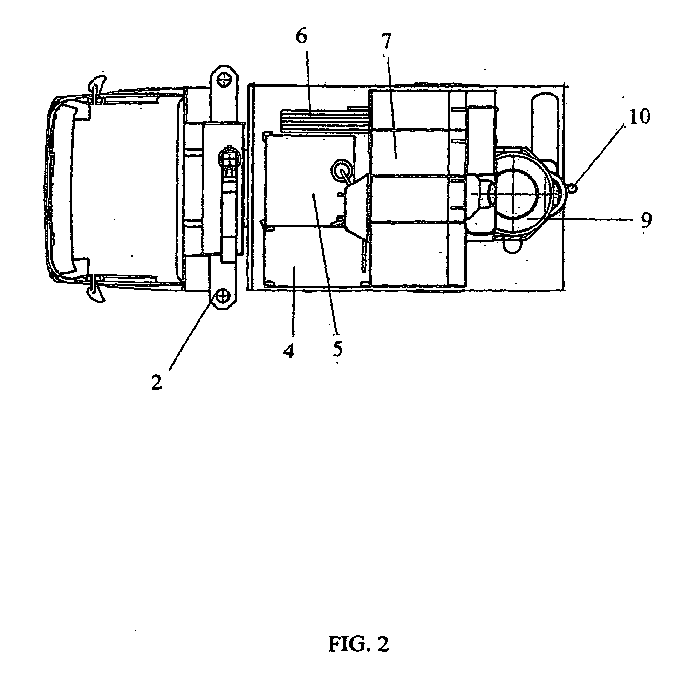

- figure 2 is a view from above of the overall structure of the complete road surfacing vehicle.

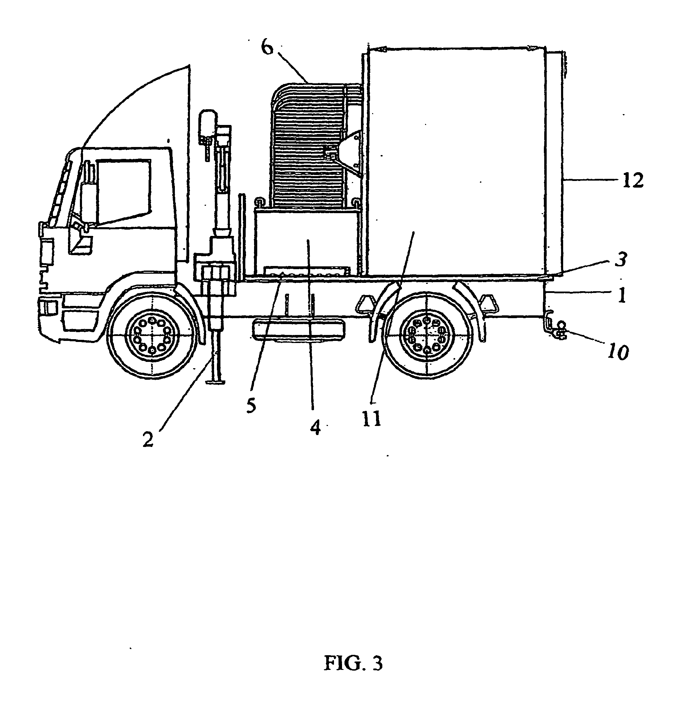

- figure 3 side view of the front part of the vehicle in which can be seen the lifting crane (2), compressor (4), the pallet (5), and space for the work tools (6).

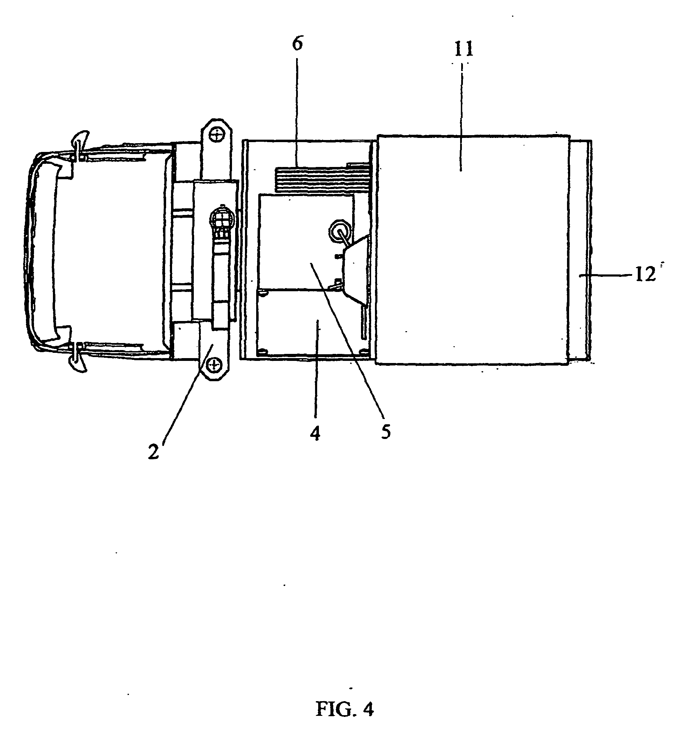

- figure 4, view in perspective from above of the front part which corresponds to figure 3.

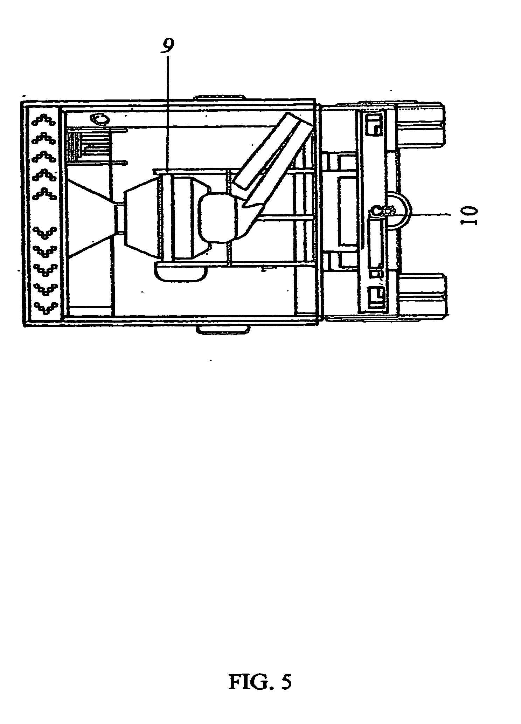

- figura 5 view in perspective of the rear part of the vehicle which corresponds to the cement mixer (9).

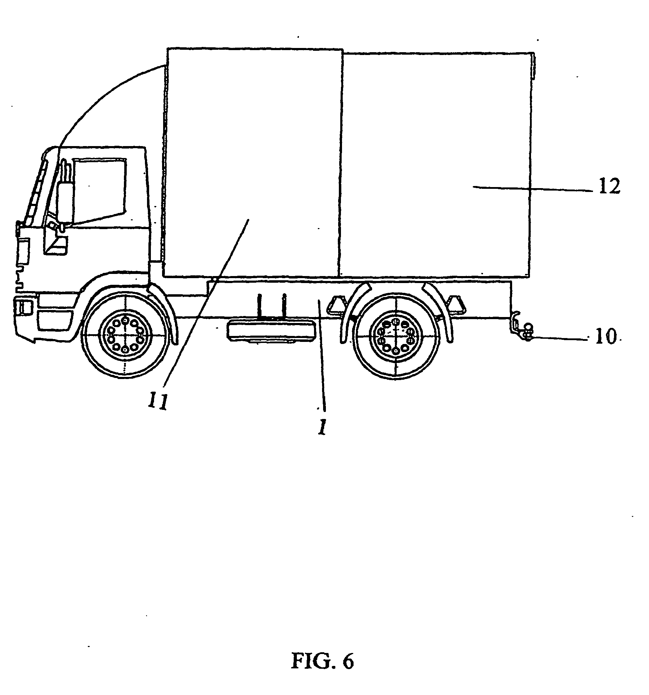

- figure 6 side view of the whole, complete road building vehicle covered by the fibre glass fairing.

Above all, here is a description of the different elements of the whole assembly, and also the working mechanisms of each one of them.

The Complete Road Surfacing Vehicle consists of:
- a combination chassis-cab of a medium sized lorry, the characteristics of the cab should be such that the size of it make it easy to handle and manoeuvre in urban conditions, and should also be sufficient to be able to take the weight of the adjoining platform. As an example, we can state maximum weight of the front axle of 5200 kg and of the back axle of no more than 10700 kg. manoeuvrability, turning circle between kerbs less than 6000 mm and turning circle between walls of less than 6500 mm.
- a false chassis (1) to ensure an even distribution of weight on the chassis.
- platform (3) joined by crossbars of steel soldered to this false chassis, 2300 mm wide and 3475 mm long on which will be fixed a floor of galvanised sheet metal.
- on the front part of the chassis (1) is a lifting crane (2) of less 1000 kg will be installed with a lifting capacity of approx. 1100 kgs, at a distance of 3 metres. The crane includes the elevation jib, the hydraulic mechanisms and the stabilising jacks,

The control panel of the crane is situated on each side of the vehicle.
- a static compressor (4) of reduced weight and size which is able to supply a flow of air of 1,4 m³/min with a pressure of 7 bar, mounted on the platform by quick use clamps and powered by a diesel engine, which enables it to be used independently away from the platform.
- a pallet (5) also fixed by quick use clamps, which can transport up to 1000 kgs of material of tiling, which also has a removable cage made of steel tubing to ensure that the materials do not move whilst being transported on the road, and with a superior hook to facilitate the lowering of the platform to the floor.
- tools to carry out the work, for example, and without being a complete list, barriers, trolley, traffic signals, all held to the platform by quick use clamps.
- a silo (7) made from 6 mm sheet metal and fixed to the platform by eight supports, divided into four compartments for each of the materials used in the cement mixer and ending in a funnel for the extraction of the materials to the cement mixer.
- a fibre-glass water tank (8) with capacity of up to 650 litres, with two electric motors situated in the lower part, to enable the supply to the cement mixer and the hose pipe and fed off the engine of the vehicle.
- a concrete mixer (9) with a drum with a capacity of up to 350 litros, anchored by two pillars fixed to the platform, moved by a hydraulic engine of 1.5 KW power, the pressure of which will be generated by a motor connected to the power outlet of the engine.

The process of feeding from the silo, is by conveyor belt and an elevating mechanism, powered by both hydraulic engines, to the feed chute, which is situated above the mouth of the mixer, when this is in a vertical position.

The water is transported from the tank through a pipe to the mouth of the mixer. The dosification of the water is adjusted by a valve which is situated in the end phase.

All the processes of the concrete-mixer are controlled from a switch which is joined by a cable to the rear part of the vehicle.

- a hose pipe which is fed by the second motor situated in the water tank
- two spotlights mounted on the back upper part, on two retractable arms, so that they are hidden under the fairing, and once the rear blind is opened can be brought out and focused in the direction that is needed.
- tow hitch(10) of ball and pin
- a mobile fairing (11) made of fibre-glass, 2000 mm in length, which covers the front part of the platform whilst the vehicle is being driven, at the time when work will be started it will slide back, powered by an electric motor, which activates a zip system, and will end up on top of the fixed part of the fairing.
- a fixed fairing (12) of 2195 mm in length, which covers the rear part of the platform, made of fibre-glass, on the upper part of the fairing there are four hatchways which give access to the pipes which feed the silo.

### Numbers utilised in the figures.-

1. False chassis
2. Crane
3. Platform
4. Compressor
5. Pallet
6. Space for work tools: barriers.
7. Silo.
8. Water tank.
9. Concrete mixer.
10. Coupling.
11. Mobile fairing
12. Fixed fairing.

## Claims

1. Complete Road Surfacing Vehicle of a size that enables it to be easily manoeuvred in urban thoroughfares as it comprises a platform (3) joined by a false chassis (1) to the cab of a medium sized lorry on which, by means of quick clamps, are installed: on the front left hand side, a compressor (4), a pallet (5) to carry materials at the front central part, barriers, traffic signs and trolley (6) in the front right hand side, a silo in the central part (7), a water tank (8) with two electric pumps, a concrete mixer (9) situated at the back, a hose pipe on the right hand side at the back, two focus lights situated on the upper part of the back and a tow-hook (10) on the lower part of the back, between the cab of the lorry and the false chassis a lifting crane (2,) all of the above being covered by a mobile fairing (11) which covers the front part and a fixed fairing (12) at the rear.

2. Complete Road Surfacing Vehicle in compliance with Claim 1 wherein the false chassis (1) ensures an equal distribution of weight on the chassis.

3. Complete Road Surfacing Vehicle in compliance with Claim 1 wherein the lifting crane (2) situated on the front part of the chassis comprises hydraulic activators and stabilising jacks which are activated by a control system situated at both sides of the vehicle.

4. Complete Road Surfacing Vehicle in compliance with Claim 1 wherein the compressor (4) situated at the front left hand side of the platform (3) is run by a diesel motor which permits its independent use when it is necessary to use it in places away from the Complete Road Surfacing Vehicle.

5. Complete Road Surfacing Vehicle in compliance with Claim 1 wherein the pallet (5) situated in the central part of the front of the platform (3) has a collapsible cage with a hook on its upper part which enables it to be unloaded by crane.

6. Complete Road Surfacing Vehicle in compliance with claim 1 wherein the silo (7) situated in the central part of the platform (3) consists of four compartments, ends in the shape of a funnel and is filled through pipes which open in the upper part of the fairing (12).

7. Complete Road Surfacing Vehicle in compliance with claim 1 wherein the water tank (8) is situated in the space left underneath the silo (7) due to its narrowing, with the two electric pumps being fed from the alternator of the engine of the vehicle.

8. Complete Road Surfacing Vehicle in compliance with Claim 1 wherein the concrete mixer (9) situated at the rear part of the platform (3) is powered by a hydraulic motor, which takes its power from the engine, controlled by a switch, and the feeding of materials is produced from the silo (7) by a conveyor belt and a lifting mechanism moved by hydraulic motors included in the water tank (7) and the addition of water through a pipe from the water tank (8).

9. Complete Road Surfacing Vehicle in compliance with Claim 1 wherein the hose pipe situated on the side at the back is fed by the second pump situated in the water tank (8).

10. Complete Road Surfacing Vehicle in compliance with claim 1 wherein the two focus lights situated in its upper rear part are fed by the alternator of the engine of the vehicle, mounted on two arms which are hidden inside the fairing, and once this is oponed, can be brought out and directed where needed.

11. Complete Road Surfacing Vehicle in compliance with claim 1 wherein the front part of the platform (3) is covered by the mobile fairing whilst the vehicle is being driven the mobile fairing being moved back by a system of zips powered by an electric motor, at the time of utilisation of the instruments situated in the front part.

12. Complete Road Surfacing Vehicle in compliance with claim 1 wherein the rear part of the platform (3) is covered by the fixed fairing the top part of which has four hatches which give access to the filling pipes of the silo, and is closed by an aluminium blind rolled to its upper part.

## Patentansprüche

1. Multifunktionelles Straßenbaufahrzeug mit Maßen, die eine leichte Manövrierbarkeit auf städtischen Verkehrswegen erlauben, das sich zusammensetzt aus einer Plattform (3), die durch einen Zwischenrahmen (1) mit der Kabine eines mittelschwerer Lastwagens verbunden ist, an deren linkem vorderem Teil durch schnelle Verankerungen ein Kompressor (4) angebracht ist, sowie aus einer Palette (5) zum Transport von Material im mittleren vorderen Teil, Zäunen zur Kennzeichnung, Verkehrszeichen und einer Schubkarre (6) im rechten vorderen Teil, einem Silo im mittleren Teil (7), einem Wassertank (8) mit zwei Elektopumpen, einer Betonmischmaschine (9) im hinteren Teil, einem Wasserschlauch im rechten hinteren Teil, zwei Scheinwerfern im oberen hinteren Teil und einer Anhängerkupplung (10) im hinteren unteren Teil. Zwischen der Kabine des Lastwagens und dem Zwischenrahmen ist ein Hebekran (2) angebracht, und all dies ist bedeckt durch eine abnehmbare Verkleidung (11), die den gesamten vorderen Teil abdeckt, und eine feste Verkleidung (12) im hinteren Teil.

2. Multifunktionelles Straßenbaufahrzeug gemäß Anspruch 1, bei dem der Zwischenrahmen eine gleichmäßige Lastenverteilung auf dem Fahrgestell gewährleistet.

3. Multifunktionelles Straßenbaufahrzeug gemäß Anspruch 1, bei dem der Hebekran (2) im vorderen Teil des Chassis einen Kranausleger, Hydraulikheber und Abstützungen umfasst und durch ein Steuersystem betrieben wird, das sich auf beiden Seiten des Fahrzeugs befindet.

4. Multifunktionelles Straßenbaufahrzeug gemäß Anspruch 1, bei dem der Kompressor (4) im linken vorderen Bereich der Plattform (3) von einem Dieselmotor betrieben wird, welcher deren selbständigen Betrieb ermöglicht, wenn deren Verwendung an Stellen erforderlich ist, die weiter von dem multifunktionelles Straßenbaufahrzeug entfernt sind.

5. Multifunktionelles Straßenbaufahrzeug gemäß Anspruch 1, bei dem die Palette (5) im mittleren vorderen Teil der Plattform (3) einen demontierbaren Käfig mit ein Haken in seinen oberen Teil besitzt, der das Abladen durch einen Kran erlaubt.

6. Multifunktionelles Straßenbaufahrzeug gemäß Anspruch 1, bei dem der der Silo (7) im mittleren Teil der Plattform (3) aus vier Fächern besteht und trichterförmig ausläuft und über die Schläuche mit Öffnung im oberen Teil der festen Verkleidung (12) befüllt wird.

7. Multifunktionelles Straßenbaufahrzeug gemäß Anspruch 1, bei dem der Wassertank (8) auf Grund seiner Verengung in dem Hohlraum unterhalb des Silos (7) liegt, und die beiden Elektropumpen von dem Generator des Fahrzeugmotors gespeist werden.

8. Multifunktionelles Straßenbaufahrzeug gemäß Anspruch 1, bei dem die Betonmischmaschine (9) im hinteren Teil der Plattform (3) liegt und durch einen Hydraulikmotor betrieben wird, welcher vom Antrieb des Motors gespeist wird, gesteuert durch eine Drucktastatur, und dessen Materialzuführung vom Silo (7) aus erfolgt, und zwar mittels eines Förderbandes und eines Hebemechanismus, welche beide durch Hydraulikmotoren betrieben werden, die an dem Wassertank (7) liegen, wobei die Wasserzufuhr mittels einer Rohrleitung vom Wassertank (8) aus erfolgt.

9. Multifunktionelles Straßenbaufahrzeug gemäß Anspruch 1, bei dem der Wasserschlauch im hinteren, seitlichen Teil angebracht ist und durch eine zweite Pumpe am Wassertank (8) gespeist wird.

10. Multifunktionelles Straßenbaufahrzeug gemäß Anspruch 1, bei dem im hinteren, oberen Teil zwei Scheinwerfer befestigt sind, die von dem Generator des Fahrzeugmotors aus gespeist werden und von zwei Armen aus montiert werden, welche innerhalb der Verkleidung verborgen bleiben und nach der Öffnung ausgefahren und zu jeder gewünschten Seite hin geschwenkt werden können.

11. Multifunktionelles Straßenbaufahrzeug gemäß Anspruch 1, bei dem der vordere Teil der Plattform (3) während der Fahrt durch eine abnehmbare Verkleidung abgedeckt wird, die mittels eines Systems von Schienen, die von einem Elektromotor betrieben werden, nach hinten geschoben wird, sobald die Armaturen im vorderen Teil bedient werden.

12. Multifunktionelles Straßenbaufahrzeug gemäß Anspruch 1, bei dem das Hinterteil der Plattform (3) durch eine feste Verkleidung abgedeckt wird, in deren oberem Teil sich vier Klapptore befinden, welche Zugang zu den Befüllungsschläuchen des Silos bieten und durch eine Blende aus Aluminium abgeschlossen bleibt, die in ihrem oberen Teil eimgerollt wird.

## Revendications

1. Véhicule Intégral de Pavage aux dimensions telles qui permettent une manoeuvrabilité aisée en voies urbaines qui comprend une plateforme (3) unie par un faux châssis (1) à la cabine d'un camion de moyen tonnage sur lequel au moyen d'ancrages rapides on installe su la partie avant gauche un compresseur (4), un palet (5) pour porter du matériel sur la partie centrale avant, des clôtures signalisées, des panneaux indicateurs et une brouette (6) sur la partie avant droite, un silo dans sa partie centrale (7), un réservoir d'eau (8) avec deux pompes électriques, un malaxeur à béton (9) situé sur la partie arrière, un tuyau d'arrosage sur la partie arrière droite, deux spots d'éclairage situés sur la partie arrière supérieure et un crochet (10) dans sa partie arrière inférieure. Entre la cabine du camion et le faux châssis on place une grue élévatrice (2). Tout cela étant couvert par un carénage mobile (11) qui recouvre toute la partie avant et un carénage fixe (12) dans sa partie arrière.

2. Véhicule Intégral de Pavage selon la revendication 1 comprenant un faux châssis qui permet la répartition uniforme des charges sur le châssis.

3. Véhicule Intégral de Pavage selon la revendication 1 comprenant une grue élévatrice dans la partie avant du châssis qui comprend une flèche d'élévation, des appareils hydrauliques et des vérins de stabilisation mus par un système de contrôle situé des deux côtés du véhicule.

4. Véhicule Intégral de Pavage selon la revendication 1 comprenant un compresseur (4) situé dans la zone avant gauche de la plateforme (3) mû par un moteur diesel qui permet un fonctionnement autonome lorsque son usage sera nécessaire dans des endroits éloignés du véhicule intégral de pavage.

5. Véhicule Intégral de Pavage selon la revendication 1 comprenant le palet (5) situé sur la partie centrale avant de la plateforme (3) et comprenant une cage démontable avec un crochet dans sa partie supérieure qui permet sa décharge par la grue.

6. Véhicule Intégral de Pavage selon la revendication 1 comprenant un silo (7) situé sur la partie centrale de la plateforme (3) et comprenant quatre compartiments y finissant sous forme d'entonnoir. Le remplissage du silo s'effectue grâce à des tuyaux qui s'ouvrent dans la partie supérieure du carénage fixe (12).

7. Véhicule Intégral de Pavage selon la revendication 1 qui comprend un réservoir d'eau (8) dans le creux laissé dans la partie inférieure du silo (7) dû à son rétrécissement, avec deux pompes électriques alimentées depuis l'alternateur du moteur du véhicule.

8. Véhicule Intégral de Pavage selon la revendication 1 qui dans la partie arrière de la plateforme (3) possède un malaxeur à béton (9) fonctionnant grâce à un moteur hydraulique qui puise sa force du moteur, contrôlé par un boîtier à touches et dont l'acheminement en matériaux s'effectue à partir du silo (7) au moyen d'un transporteur à bande et un mécanisme d'élévation mus par des moteurs hydrauliques inclus dans le réservoir d'eau (7) et l'alimentation en eau se fait au moyen d'une tuyauterie depuis le réservoir (8).

9. Véhicule Intégral de Pavage selon la revendication 1 qui a dans sa partie latérale arrière un tuyau d'arrosage alimentée par une deuxième pompe située dans le réservoir d'eau.

10. Véhicule Intégral de Pavage selon la revendication 1 qui possède dans sa partie supérieure fixe deux spot d'éclairage alimentés depuis l'alternateur du moteur du véhicule, et montés sur deux bras qui demeurent cachés dans le carénage et qui une fois ouvert peuvent s'en extraire et s'orienter vers la zone appropriée.

11. Véhicule Intégral de Pavage selon la revendication 1 dont la partie avant de la plateforme (3) demeure recouverte par un carénage mobile pendant que le véhicule circule et qui glisse vers l'arrière moyennant un système de glissières mû par un moteur électrique au moment de l'utilisation des instruments situés sur la partie avant.

12. Véhicule Intégral de Pavage selon la revendication 1 dont la partie arrière de la plateforme (3) est couverte par un carénage fixe et sur la partie supérieure duquel il y a quatre trappes qui donnent accès aux tuyaux de remplissage du silo et qui se ferme au moyen d'une persienne en aluminium enroulé dans sa partie supérieure.
